# EUROPÄISCHE PATENTSCHRIFT

(11) **EP 2 021 449 B1**
(45) Veröffentlichungstag und Bekanntmachung des Hinweises auf die Patenterteilung: **16.01.2013**
(21) Anmeldenummer: 07728980.9
(22) Anmeldetag: 10.05.2007
(51) Int. Cl.: C11D 3/22, C11D 3/39, C11D 17/00, B01J 13/04, B01J 2/02

(54) **VERKAPSELTE BLEICHMITTELTEILCHEN**
ENCAPSULATED BLEACHING AGENT PARTICLES
PARTICULES D'AGENT DE BLANCHIMENT ENCAPSULÉES

(30) Priorität: 19.05.2006 DE 102006023937
(43) Veröffentlichungstag der Anmeldung: 11.02.2009
(73) Patentinhaber: Henkel AG & Co. KGaA, 40589 Düsseldorf (DE)
(72) Erfinder: SCHMIEDEL, Peter, 40599 Düsseldorf (DE); VÖLKEL, Heinz-Jürgen, 40764 Langenfeld (DE); KAISER, Heribert, 40223 Düsseldorf (DE); RYBINSKI VON, Wolfgang, 40593 Düsseldorf (DE); HÖLSKEN, Sören, 40589 Düsseldorf (DE); BLANK, Volker, 51375 Leverkusen (DE); GUCKENBIEHL, Bernhard, 50769 Köln (DE)
(86) Internationale Anmeldenummer: PCT/EP2007/054528
(87) Internationale Veröffentlichungsnummer: WO 2007/134977

(56) Entgegenhaltungen:
- EP-A- 1 634 944
- EP-A1- 0 510 761
- WO-A-97/04936
- WO-A-97/14780
- WO-A-2006/034758
- WO-A-2007/031387
- GB-A- 1 390 503

## Beschreibung

Die vorliegende Erfindung betrifft flüssige wasserhaltige Wasch- und Reinigungsmittel, welche kapselförmige Teilchen enthalten, die in ihrem Inneren feinteiliges Bleichmittel enthalten und deren Matrix-Kapselmaterial ein vernetztes Polymer ist.

Bei Wasch- und Reinigungsmitteln in flüssiger Form, insbesondere wenn sie Wasser enthalten aber auch wenn sie wasserfrei sind, kann es aufgrund von chemischer Inkompatibilität der einzelnen Inhaltsstoffe zu negativen Wechselwirkungen dieser Inhaltsstoffe untereinander und zur Abnahme ihrer Aktivität und damit zur Abnahme der Waschleistung des Mittels insgesamt kommen, auch wenn es nur relativ kurz gelagert wird. Diese Aktivitätsabnahme betrifft prinzipiell alle Waschmittelinhaltsstoffe, welche im Waschprozeß chemische Reaktionen ausführen, um zum Waschergebnis beizutragen, insbesondere Bleichmittel und Enzyme, obwohl auch tensidische oder sequestrierende Inhaltsstoffe, die für Lösungsvorgänge oder Komplexierungsschritte verantwortlich sind, insbesondere in Gegenwart der genannten chemisch reaktiven Inhaltsstoffe in flüssigen, insbesondere wäßrigen Systemen nicht unbegrenzt lagerstabil sind.

Unter den Bleichmitteln sind Phthalimidoperoxoalkansäuren, wie zum Beispiel 6-Phthalimidoperoxohexansäure (PAP) als hocheffizient bekannt, sie sind jedoch in herkömmlichen Flüssigwaschtnittelrezepturen chemisch besonders instabil. Zumeist zersetzen sie sich in solchen in wenigen Tagen vollständig. Selbst wenn diese flüssigen Mittel von möglichen Reaktionspartnem der Poroxocarbonsäure, wie ungesättigten Verbindungen, Aldehyden, Aminen, Chlorid etc., befreit werden, zersetzen sie sich dennoch in Gegenwart der Tenside, auch wenn diese nicht oxidativ angegriffen werden. Der Grund hierfür ist möglicherweise, daß die Phthalimidoperoxoalkansäuren zwar als nur gering wasserlösliche Feststoffe in dieser Form stabil sind, sich in Gegenwart von Tensiden jedoch auflösen, in gelöster Form hoch reaktiv sind und sich sowohl über eine bimolekulare Reaktion unter Abspaltung von Singulettsaucrstoff als auch durch Hydrolyse zu der Phthalimidoalkansäure und H₂O₂ zersetzten. Letzteres ist insbesondere bei niedrigen Waschtemperaturen und in den auftretenden Konzentrationen jedoch praktisch nicht bleichaktiv, so daß als Ergebnis die Bleichwirkung des Mittels bei Lagerung verlorengeht.

Der Verbraucher verlangt jedoch flüssige Wasch- und Reinigungsmittel, die auch nach Lagerung und Transport zum Zeitpunkt der Anwendung optimal ihre Wirkung entfalten. Dies bedingt, dass sich die Inhaltsstoffe des flüssigen Wasch- und Reinigungsmittels zuvor weder abgesetzt, zersetzt oder verflüchtigt haben.

Durch aufwendige und dementsprechend teure Verpackungen kann beispielsweise der Verlust flüchtiger Komponenten verhindert werden. Chemisch inkompatible Komponenten können separiert von den restlichen Komponenten des flüssigen Wasch- und Reinigungsmittels aufbewahrt und dann zur Anwendung zudosiert werden. Die Verwendung undurchsichtiger Verpackungen verhindert die Zersetzung lichtempfindlicher Komponenten, hat aber auch den Nachteil, dass der Konsument Aussehen und Menge des flüssigen Wasch- und Reinigungsmittels nicht sehen kann.

Ein Konzept zur Einarbeitung empfindlicher, chemisch oder physikalisch inkompatibler sowie flüchtiger Inhaltsstoffe besteht im Einsatz von Kapseln, in denen diese Inhaltsstoffe eingeschlossen sind. Bei Kapseln werden zwei Typen unterschieden. Einerseits gibt es Kapseln mit Kern-Hülle-Struktur, bei denen der Inhaltsstoff von einer Wand oder Barriere umgeben ist. Andererseits gibt es Kapseln, bei denen der Inhaltsstoff in einer Matrix aus einem matrix-bildenden Material verteilt ist. Solche Kapseln werden auch als "Speckles" bezeichnet.

Beim Einsatz von Kapseln und anderen Teilchen in Waschmitteln ist es zudem wichtig, dass sich diese während des Waschvorgangs auflösen und keine Rückstände auf der Wäsche hinterlassen. Gleiches gilt sinngemäß auch für ihren Einsatz in Reinigungsmitteln für harte Oberflächen.

Verschiedentlich ist auch vorgeschlagen worden, das Problem der mangelnden Stabilität von Bleichmitteln und insbesondere von Peroxocarbonsäuren durch ein Coating zu lösen. Beispielsweise ist im europäischen Patent EP 0 510 761 B1 ein gecoatetes Bleichmittelgranulat beschrieben worden, welches als Umhüllungsmaterial Paraffin mit einem Schmelzpunkt im Bereich von 40 °C bis 50 °C in Abmischung mit bestimmten Additiven, ausgewählt aus Ethylen/Vinylacelat-Copolymeren, hydrierten Kolophonium-methylestern, Ethylacrylat/2-Ethylhexylacrylat-Copolymeren und deren Mischungen, aufweist. Aus der europäischen Patentanmeldung EP 0 436 971 A2 sind umhüllte Teilchen bekannt, die 45-65 Gew.-% eines festen bleichmittelhaltigen Kerns und 35-55 Gew.-% einer Umhüllungsschicht aufweisen, die Paraffinwachs mit einem Schmelzpunkt im Bereich von 40 °C bis 50 °C enthält. Imidoperoxocubonsäuren sind dort unter den Bleichmitteln nicht aufgeführt. Es zeigte sich jedoch, daß das Aufbringen von Coatingmatenalien keineswegs immer zu einer Erhöhung der Stabilität gerade von sehr aktiven Bleichmitteln wie beispielsweise Imidopeioxocarbonsäuren führt.

WO 97/14780 A1 offenbart ein Verfahren zur Herstellung von Bleichaktivatoiteilehm, wobei eine Mischung aus in Natriumalginatlösungen dispergiertem TAED in eine wäßrige CaCl₂-Lösung vertropft wird. WO 2006/034758 A1 offenbart flüssige Wasch- und Reinigungsmittel mit an ein Substrat gebundenen verkapselten Aktivstoffen, wobei die Kapselmatrix beispielsweise aus Carrageenan, Alginat oder Gellan Gum gebildet werden kann. Aus GAB 1 390 503 sind Flüssigwaschmittel bekannt, die Kapseln aus festem Kemmaterial und umhüllendem wasserlöslichem Polymergel enthalten. In der US 6,855,681 wird eine Reinigungsmittelzusammensetzung offenbart, die einen matrixverkapselten, aktiven Inhaltsstoff umfasst. Die Matrix der Kapseln enthält ein hydratisiertes anionisches Gum und der verkapselte aktive Inhaltsstoff ist vorzugsweise ein Duftstoff.

Zusammenfassend besteht immer noch das Problem, ein lagerstabiles flüssiges Mittel bereit zu stellen, das außer einem Bleichmittel möglichst alle, auch miteinander unverträgliche, für ein gutes Wasch- beziehungsweise Reinigungsergebnis jedoch notwendige Inhaltsstoffe enthält.

Gegenstand der vorliegenden Erfindung, die hierzu einen Beitrag leisten will, ist ein wässriges flüssiges Wasch- oder Reinigungsmittel, enthaltend Tensid und nach dem unten näher beschriebenen Verfahren erhältliche Bleichmittelteilchen.

Dieses ist eine mit Paraffinwachs umhüllte Kapsel, die feinteilige Persäure in einer Matrix aus vernetztem Polymer umfasst, welches durch Vernetzen von vernetzbarem wasserlöslichem Polymer erhalten wird.

Durch Verkapselung des Bleichmittels kann diese für die primäre Leistung eines Wasch- und Reinigungsmittels wichtige Verbindung insbesondere auch in flüssige Wasch- und Reinigungsmittel eingebracht werden, ohne dass es zu unerwünschten Wechselwirkungen mit anderen Bestandteilen (Zersetzung, Ver- oder Entfärbung, etc.) bzw. zu sonstigen unerwünschten Effekten (phasentrennung. Trübung, Ausflockung, etc.) kommt.

Die monodispersen sphärischen Bleichmittelgranula können durch Vertropfen einer wäßrigen Mischung enthaltend dispergiertes, feinteiliges Bleichmittel und wasserlösliches vernetzbares Polymer, und Vernetzen des Polymers hergestellt werden, Dabei ist es bevorzugt, wenn die wäßrige Mischung 1 Gew.-% bis 60 Gew.-%, insbesondere 5 Gew.-% bis 50 Gew.-% dispergiertes feinteiliges Bleichmittel enthält. Unter einem feinteiligen Mittel wird dabei ein solches verstanden, welches kleinere Teilchen aufweist als die Granula, die als Ergebnis des Verfahrens entstehen sollen; vorzugsweise sind die feinteiligen Bleichmittel erheblich kleiner und ihre mittlere Teilchengröβe liegt bei unter 10 %, insbesondere unter 2 %, der mittleren Teilchengröße der erfindungsgemäβen Granula. Wichtig ist auch, dass sie sich zumindest kurzfristig, das heißt über die Länge des Verfahrens bis zum Vernetzen, in Wasser dispergieren lassen. Erfindungsgemäβ gesignete Bleichmittel sind Peroxocarbonsänren.

Unter den Peroxocarbonsäuren sind insbesondere Imidoperoxccarbonsauten bevorzugt. Es kommen beispielsweise 4-Phthalimidoperoxobutansaure, 5-Phthalimidoperoxopentansäure, 6-Phthalimidoperoxohexansäure, 7-Phthalimidoperoxoheptansäure, N,N'-Terephthaloyl-di-6-aminoperoxohexansäure und Mischungen aus diesen in Betracht. Zu den am meisten bevorzugten Peroxocarbonsauren gehören die Phthalimidoperoxoalkansäuren, insbesondere 6-Phthalimidoperoxohexansäure (PAP).

Die Menge an vernetzbaren Polymer in der wässrigen Matrix-Lösung beträgt vorzugsweise zwischen 0,01 Gew.-% und 5 Gew.-%, besonders bevorzugt zwischen 0,1 Gew.-% und 2 Gew.-% und insbesondere bevorzugt zwischen 0,5 Ges.-% und 3 Gew.-%. Das vernetzbare Polymer ist wasserlöslich, so dass man daraus die wässrigen Lösungen mit mindestens den genannten Konzentrationsobergrenzen herstellen kann.Vorzugsweise handelt es sich um ein ionotrop vernetzbares Polymer. Letzteres wird insbesondere ausgewählt aus der Gruppe umfassend Carrageenan, Alginat und Gellan Gum sowie deren Mischungen und besonders bevorzugt wird Natriumalginat als Matrix-bildendes vernetzbares Polymer eingesetzt.

Ein nach dem Verfahren erhältliches Bleichmittelteilchen weist vorzugsweise einen Durchmesser entlang der größten räumlichen Ausdehnung von 100 µm bis 10.000 µm, insbesondere 1 mm bis 3 mm, auf. Durch das Vertropfungsverfahren kann in einfacher Weise gewährleistet worden, dass das Teilchen sphärisch, das heißt weitestgehend rund ist, insbesondere dass sein Durchmesser in allen anderen räumlichen Ausdehnungen nicht mehr als 15 %, insbesondere nicht mehr als 10 % und besonders bevorzugt nicht mehr als 5 % kleiner ist als sein Durchmesser entlang der größten räumlichen Ausdehnung.

Es ist bevorzugt, dass das die Matrix ausbildende vernetzbare Polymer aus einem Material aus der Gruppe umfassend Carrageenan, Alginat und Gellan Gum sowie deren Mischungen ausgewählt ist, besonders bevorzugt ist Na-Alginat.

Alginat ist ein natürlich vorkommendes Salz der Alginsäure und kommt in Braunalgen (Phaeophycea) als Zellwandbestandteil vor. Alginate sind saure, Carboxy-Gruppen enthaltende Polysaccharide mit einem relativen Molekulargewicht M_{R} von ca. 200.000, bestehend aus d-Marmuronsäure und 1-Guluronsäre in unterschiedlichen Verhältnissen, welche mit 1,4-glykosidischen Bindungen verknüpft sind. Die Natrium-, Kalzium-, Ammonium- und Magnesiumalginate sind wasserlöslich. Die Viskosität von Alginat-Lösungen hängt unter anderem von der Molmasse und vom Gegenion ab. Calciumalginate bilden zum Beispiel bei bestimmten Mengenverhältnissen thermoirreversible Gele. Natriumalginate ergeben sehr viskose Lösungen mit Wasser und können durch Wechselwirkung mit di-oder trivalenten Metallionen wie Ca²⁺ vernetzt werden. Inhaltsstoffe, die auch in der wässrigen Natriumalginatlösung enthalten sind, werden so in einer Alginatmatrix eingeschlossen.

Carrageenan ist ein Extrakt aus den zu den Florideen zählenden Rotalgen (Chondrus crispus u. Gigartina stellata). In Gegenwart von K⁺-Ionen oder Ca²⁺-Ionen vernetzt Carrageenan.

Gellan Gum ist ein unverzweigtes anionionisches mikrobielles Heteroexopolysaccharid mit einer tetrasaccharidischen Grundeinheit, bestehend aus den Monomeren Glucose, Glucuronsäure und Rhamnose, wobei etwa jede Grundeinheit mit einem L-Glycerat und jede zweite Grundeinheit mit einem Acetat verestert ist. Gellan Gum vernetzt in Gegenwart von K⁺-Ionen, Na⁺-Ionen, Ca²⁺-Ionen oder Mg²⁺-Ionen. Von den genannten Materialien für die Matrix ist Alginat bevorzugt.

Diese Materialien können besonders gut mit Kationen zu vernetzten unlöslichen Gelen vernetzt werden. Durch Eintropfen von Lösungen dieser Materialien in Kationen-haltige Lösungen können auf einfache Weise im Wesentlichen kugelförmig Kapseln hergestellt werden, welche in ihrem Inneren noch die Lösungsbestandteile enthalten. Wenn die Lösung der Vernetzungsmaterialien noch weitere Bestandteile aufweist, im vorliegenden Fall darin dispergiertes Bleichmittel, sind diese nach dem Vernetzen vom Kapselmaterial umgeben und dadurch geschützt. Durch Trocknen kann das Lösungsmittel, insbesondere Wasser, aus dem Kapselinneren zumindest anteilig entfernt worden. Ein völlständiges Entfernen ist normalerweise nicht nötig und insbesondere dann nicht bevorzugt, wenn die Granula in ein flüssiges Wasch- oder Reinigungsmittel eingearbeitet werden sollen, welches das entsprechende Lösungsmittel, insbesondere Wasser, bereits ebenfalls enthält, da sich dann das Lösungsmittel-Gleichgewicht zwischen dem Kapselinneren und der die Kapsel umgebenden äußeren kontinuierlichen Flüssigphase rascher einstellt.

Die Kapseln können im herstellungsbedingten Rahmen eine beliebige Form aufweisen, sie wind jedoch bevorzugt wenigstens näherungsweise kugelförmig. Durch das Vertropfen ist außerdem leicht gewährleistbar, dass sie monodispers sind, das heißt alle Granula sind im wesentlichen gleich groß, da sich bei konstanten Tropfbedingungen aus der gleichen Vertropfungsflüssigkeit gleiche Tropfen bilden. Vorzugsweise ist die Größenverteilung der Bleichmittelkapseln so eng, dass sämtliche Granula einen Durchmesser entlang der größten räumlichen Ausdehnung aufweisen, welcher um nicht mehr als 15 %, insbesondere nicht mehr als 10 % und besonders bevorzugt nicht mehr als 5 % vom Gewichts-Mittelwert der größten räumlichen Ausdehnung der Bleichmittelkapselgesamtheit abweicht.

Aus ästhetischen Gründen kann es wünschenswert sein, dass die Kapseln gefärbt sind. Dazu kann die Kapsel ein oder mehr färbende Mittel wie Pigment oder Farbstoff enthalten. Vorzugsweise stammt dieser aus der wässrigen Matrix-Lösung, die dazu Farbstoff, insbesondere Farbstoff auf Phthalocyaninbasis, enthält.

Die Kapseln können zusätzlich Mikrohohlkugeln enthalten. Mikrohohlkugeln sind Teilchen mit einem Durchmesser von 2 bis zu 500 µm, insbesondere von 5 bis 20 µm, und einem spezifischen Gewicht von weniger als 1 g·cm³. Zweckmäßigerweise sind die Mikrohohlkugeln rund und glatt. Die Mikrohohlkugeln können aus anorganischem Material wie Wasserglas, Aluminiumsilikat, Borsilikatglas, Sodakalkglas oder einer Keramik oder aus organischen Polymeren wie zum Beispiel Homo- oder Copolymere von Styrol. Acrylnitril und Vinylidenchlorid sein. Geeignete Mikrohohlkugeln sind im Handel beispielsweise unter den Namen Fillite® (ex Trelleborg Fillite), Expancel® (ex Akzo Nobel), Scotchlite® (ex 3M), Dualite® (ex Sovereign Specialty Chemicals), Sphericel® (ex Potters Industries), Zeeospheres® (ex 3M), Q-Cel® (ex PQ Corporation) oder Extendospheres® (ex PQ Corporation) erhältlich. Weitere geeignete Mikrohohlkugeln werden unter der Produktbezeichnung E-Spheres von der Firma OMEGA MINERALS angeboten. E-Spheres sind weiße, keramische Mikrohohlkugeln, die in unterschiedlichen Korngrößen, Korngrößenverteilungen, Schüttgewichten und Schüttvolumen angeboten werden. Viele der genannten Mikrohohlkugeln sind chemisch inert und werden nach Zerstörung der Kapsel in der Waschflotte dispergiert und mit dieser dann entfernt.

Durch Einbau von Mikrohohlkugeln kann die Dichte der Kapseln variiert bzw. eingestellt werden. Die Menge an Mikrohohlkugeln in einer Kapsel hängt dabei von der gewünschten Dichte der Kapsel ab. Es ist aber bevorzugt, dass die Menge an Mikrohohlkugeln in der wässrigen Matrix-Lösung vorzugsweise zwischen 0 und 10 Gew.-%, mehr bevorzugt zwischen 1 und 5 Gew.-% und insbesondere bevorzugt zwischen 2 und 4 Gew.-% beträgt.

Die Herstellung der Kapseln kann beispielsweise mittels einer Vertropfungsanlange der Firma Rieter Automatik GmbH erfolgen. Dabei erfolgt die Vertropfung der wässrigen Matrix-Lösung, die das einzuschließend feinteilige Bleichmittel enthält, durch Aufprägen einer Schwingung, die mit Hilfe einer oszillierenden Membran erzeugt. Der Tropfenabriss erfolgt durch die erhöhte Scherwirkung beim Zurückschwingen der Membran. Die Vertropfung selbst kann beispielsweise durch eine Einzeldüse oder durch eine Düsenplatte mit 10 bis 500, vorzugsweise 50 bis 100 Öffnungen erfolgen. Die Düsen weisen vorzugsweise Öffnungen mit einem Durchmesser im Bereich von 0,2 bis 2, vorzugsweise 0,3 bis 0,8 mm auf. Grundsätzlich kann die Vertropfung in ein Fällbad erfolgen, welches als Rührbehälter oder Kessel ausgelegt ist. Hierbei besteht jedoch die Gefahr, dass sich Kapseln treffen und miteinander verkleben. Weiterhin können während des Rührens Kapseln und der eingeschlossene aktive Inhaltsstoff wieder zerstört werden, da der Rührvorgang durch Eintrag von Energie auch zu einem unerwünschten Temperaturanstieg führt. Diese Nachteile können vermieden werden, wenn das Fällbad nach der Art eines Strömungskanals ausgebildet ist. Die Vertropfung erfolgt in eine gleichförmige Strömung, welche die Tropfen so schnell aus der Eintropfzone wegfördert, dass sie nicht von nachfolgenden Tropfen getroffen werden und verkleben können. Solange die Kapseln noch nicht völlig ausgehärtet sind, schwimmen sie auf; mit fortschreitender Aushärtung sedimentieren sie.

Als alternative Herstellungsverfahren können auch andere Vertropfungsanlagen verwendet werden, welche sich durch unterschiedliche Tropfenbildungstechnologien unterscheiden. Beispielhaft seien hier Anlagen der Firma Gouda, der Firma Cavis oder der Firma GeniaLab genannt.

Es kann vorteilhaft sein, dass die Kapseln anschließend mit Wasser gewaschen und dann in einer wässrigen Lösung mit einem Komplexbildner, wie beispielsweise einem Phosphonat, gewaschen werden, um freie Ca²⁺-Ionen, welche unerwünschte Wechselwirkungen mit Inhaltsstoffen des flüssigen Wasch- und Reinigungsmittels, z.B. den Fettsäuren, eingehen können, auszuwaschen. Ein geeignetes Phosphonat kann beispielsweise Dequest® von der Firma Solutia sein. Anschließend können die Kapseln noch einmal oder gegebenenfalls mehrmals mit Wasser gewaschen werden, um überschüssigen Komplexbildner zu entfernen. Die in die Matrix zu überführende wäßrige Bleichmitteldispersion kann gleichfalls Stabilisatoren für das Bleichmittel, insbesondere Komplexbildner, enthalten.

Die Bleichmittelkapseln können vor der Verwendung in einem Wasch- und Reinigungsmittel getrocknet werden. Die Bleichmittelgranula werden anstatt oder vorzugsweise nach und/oder während des Trocknungsvorganges mit einem Paraffinwachs umhüllt.

Paraffinwachs stellt im allgemeinen ein komplexes Stoffgemisch ohne scharfen Schmelzpunkt dar. Zur Charakterisierung bestimmt man üblicherweise seinen Schmelzbereich durch Differential-Thermo-Analyse (DTA), wie in "The Analyst" 87 (1962), 420, beschrieben, und/oder seinen Erstarrungspunkt. Darunter versteht man die Temperatur, bei der geschmolzenes Material durch langsames Abkühlen aus dem flüssigen in den festen Zustand übergeht. Vorzugsweise werden Wachse verwendet, die im Bereich von 20 °C bis 70 °C erstarren. Dabei ist zu beachten, daß auch bei Raumtemperatur fest erscheinende Parafftnwvachsgemische unterschiedliche Anteile an flüssigem Paraffin enthalten können. Besonders bevorzugte Paraffinwachsgemische weisen bei 40 °C einen Flüssiganteil von mindestens 50 Gew.-%, insbesondere von 55 Gew.-% bis 80 Gew.-%, und bei 60 °C einen Flüssiganteil von mindestens 90 Gew.-% auf. Außerdem ist bevorzugt, wenn die Paraffine möglichst geringe flüchtige Anteile enthalten. Bevorzugte Paraffinwachse enthalten weniger als 1 Gew.-%, insbesondere weniger als 0,5 Gew.-% bei 110 °C und Normaldruck verdampfbare Anteile. Erfindungsgemäβ besonders brauchbare Paraffinwachse können beispielsweise unter den Handelsbezeichnungen Lunaflex® der Firma Füller sowie Deawax® der DEA Mineralöl AG bezogen werden. Zu den besonders bevorzugten Paraffinwachsen gehören solche, die im Bereich von 40 °C bis 65 °C, insbesondere von über 50 °C bis 60 °C schmelzen.

Paraffin wird vorzugsweise in solchen Mengen auf die Kapseln aufgebracht, dass die umhüllten Teilchen zu 2 Gew.-% bis 30 Gew.-%, insbesondere 5 Gew.-% bis 25 Gew.-% und besonders bevorzugt 7,5 Gew.-% bis 20 Gew.-% aus dem Umhüllungsmaterial Paraffinwachs bestehen. Die Durchmesser Teilchen ändern sich durch die Umhüllung in der Regel nicht signifikant, da bei den Umhüllungstemperaturen ein Teil des in der Kapselmatrix befindlichen Lösungsmittels, insbesondere Wasser, gasförmig austritt und zu einer Verkleinerung der eigentlichen Kapsel führt, die durch den Paraffinauftrag kompensiert wird. Vorzugsweise geht man zur Herstellung erfindungsgemäß umhüllter Kapseln so vor, dass man eine Wirbelschicht der zu umhüllenden Kapseln mit einer Schmelze oder gegebenenfalls einer vorzugsweise wäßrigen Emulsion, Dispersion oder Aufschlämmung des Paraffins besprüht, falls vorhanden dabei das aus der Emulsion, Dispersion oder Aufschlämmung stammende Wasser durch Verdampfen entfernt und/oder das geschmolzene Umhüllungsmaterial durch Abkühlen verfestigt und die umhüllten Kapseln in im Prinzip üblicher Weise aus der Wirbelschicht austrägt. Bei der Umhüllung mit dem Paraffinwachs bevorzugt ist ein Schmelzcoating, bei dem das Paraffin auf eine Temperatur, die 5 °C bis 40 °C über seinem Schmelzpunkt liegt, erwärmt wird und auf Kapseln aufgebracht wird, die eine Temperatur unterhalb des Paraffin-Erstarrungspunktes aufweisen. Vorzugsweise werden sie durch das dann eine entsprechend niedrige Temperatur aufweisende Wirbelmittel gekühlt, so daß sich das Paraffinwachs auf den Kapseln verfestigt.

Die Freisetzung des Bleichmittels aus den Kapseln erfolgt üblicherweise während der Anwendung der sie enthaltenden Mittel durch Zerstörung der Matrix infolge mechanischer, thermischer, chemischer und/oder enzymatischer Einwirkung. Gewünschtenfalls kann die zur Herstellung der Kapseln eingesetzte wäßrige Matrix-Dispersion zusätzlich auch Desintegrationshilfsmittel enthalten, um eine raschere Freisetzung zu erreichen. In einer bevorzugten Ausführungsform der Erfindung enthalten die Wasch- oder Reinigungsmittel gleiche oder verschiedene Kapseln in Mengen von 0,01 bis 10 Gew.-%, insbesondere 0,2 bis 8 Gew.-% und äußerst bevorzugt 0,5 bis 5 Gew.-%. Besonders bevorzugt ist der Einsatz der Kapseln in flüssigen, insbesondere wasserhaltigen Mitteln, gewünschtenfalls können sie jedoch auch in teilchenförmige Wasch- oder Reinigungsmittel eingearbeitet werden

Ein weiterer Gegenstand der Erfindung ist ein wässriges flüssiges Wasch- oder Reinigungsmittel, enthaltend Tensid und kapselförmige monodisperse sphärische Bleichmittelgranula, die dadurch erhältlich sind, dass man eine wäßrige Mischung enthaltend dispergiertes, feinteiliges Bleichmittel, welches eine Peroxocarbonsäure ist, und wasserlösliches vernetzbares Polymer vertropft und vernetzt und die Bleichmlttelgranula mit einem Paraffinwachs umhüllt.

Neben den gegebenenfalls mit Paraffine umhüllten Kapseln enthalten die Wasch- oder Reinigungsmittel Tensid(e), wobei anionische, nichtionische, kationische und/oder amphotere Tenside eingesetzt werden können. Bevorzugt sind aus anwendungstechnischer Sicht Mischungen aus anionischen und nichtionischen Tensiden. Der Gesamttensidgehalt des flüssigen Wasch- und Reinigungsmittel liegt vorzugsweise unterhalb von 40 Gew.-% und besonders bevorzugt unterhalb von 35 Gew.-%, bezogen auf das gesamte flüssige Wasch- und Reinigungsmittel. Es enthält vorzugsweise mindestens einen zusätzlichen aktiven Inhaltsstoff, der nicht Bestandteil der Granula ist, ausgewählt aus der Gruppe umfassend optische Aufheller, Komplexbildner, Bleichaktivatoren, Farbstoffe, Duftstoffe, Antioxidantien, Gerüststoffe, Enzyme, Enzym-Stabilisatoren, antimikrobielle Wirkstoffe, Vergrauungsinhibitoren, Antiredepositionsmittel, pH-Stellmittel, Soil-Release-Polymere, Farbtransier-Inhibitoren, Elektrolyte, konditionierende Öle, Schleifmittel, hautpflegende Mittel, Schauminhibitoren, Vitamine, Proteine, Konservierungsmittel, Waschltraftverstärker, Perlglanzgeber und UV-Absorber sowie deren Gemische.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO, 4 EO oder 7 EO, C₉₋₁₁-Akohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugweise nicht mehr als die der ethoxylierten Fettalkohole, insbesondere nicht mehr als die Hälfte davon.

Weitere geeignete Tenside sind Polyhydroxyfettsäureamide der Formel (2), 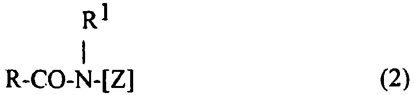 in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (3), 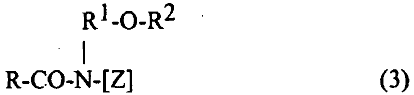 in der R für einen linearen oder verzweigten Alkyl- oder Alkenylrest mit 7 bis 12 Kohlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes.

[Z] wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann durch Umsetzung mit Fettsäuremethylestern in Gegenwart eines Alkoxids als Katalysator in die gewünschten Polyhydroxyfettsäureamide überführt werden.

Der Gehalt an nichtionischen Tensiden beträgt in den flüssigen Wasch- und Reinigungsmitteln bevorzugt 5 bis 30 Gew.-%, vorzugsweise 7 bis 20 Gew.-% und insbesondere 9 bis 15 Gew.-%, jeweils bezogen auf das gesamte Mittel.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-; Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobennsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Der Gehalt bevorzugter flüssige Wasch- oder Reinigungsmittel an anionischen Tensiden beträgt 2 bis 30 Gew.-%, vorzugsweise 4 bis 25 Gew.-% und insbesondere 5 bis 22 Gew.-%, jeweils bezogen auf das gesamte Mittel.

Die Viskosität der flüssigen Wasch- oder Reinigungsmittel kann mit üblichen Standardmethoden (beispielsweise Brookfield-Viskosimeter LVT-II bei 20 U/min und 20°C, Spindel 3) gemessen werden und liegt vorzugsweise im Bereich von 500 bis 5000 mPas. Bevorzugte Mittel haben Viskositäten von 700 bis 4000 mPas, wobei Werte zwischen 1000 und 3000 mPas besonders bevorzugt sind.

Zusätzlich zu den Kapseln und zu dem/den Tensid(en) können die Wasch- oder Reinigungsmittel weitere Inhaltsstoffe enthalten, die die anwendungstechnischen und/oder ästhetischen Eigenschaften des flüssigen Wasch- und Reinigungsmittels weiter verbessern. Im Rahmen der vorliegenden Erfindung enthalten bevorzugte Mittel zusätzlich den Kapseln und zu den Tensid(en) einen oder mehrere Stoffe aus der Gruppe der Gerüststoffe, Bleichaktivatoren, Enzyme, Elektrolyte, nichtwässrigen Lösungsmittel, pH-Stellmittel, Duftstoffe, Parfumträger, Fluoreszenzmittel, Farbstoffe, Hydrotrope, Schauminhibitoren, Silikonöle, Antiredepositionsmittel, optischen Aufheller, Vergrauungsinhibitoren, Einlauf verhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel sowie UV-Absorber. Wenn die erfindungswesentlichen Kapseln ein stark wirksames Oxidationsmittel wie PAP enthalten, kann auf die Anwesenheit von Bleichaktivator und antimikrobiellem Wirkstoff sowie Germizid und Fungizid verzichtet werden.

Als Gerüststoffe, die in den flüssigen Wasch- oder Reinigungsmitteln enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Geeignete kristalline, schichtförmige Natriumsilikate besitzen die allgemeine Formel NaMSiₓO₂ₓ₊₁ ˙H₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Bevorzugte kristalline Schichtsilikate der angegebenen Formel sind solche, in denen M für Natrium steht und x die Werte 2 oder 3 annimmt. Insbesondere sind sowohl ß- als auch δ-Natriumdisilikate Na₂Si₂O₅ • yH₂O bevorzugt.

Einsetzbar sind auch amorphe Natriumsilikate mit einem Modul Na₂O : SiO₂ von 1 : 2 bis 1 : 3,3, vorzugsweise von 1 : 2 bis 1 : 2,8 und insbesondere von 1 : 2 bis 1 : 2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/ Verdichtung oder durch Übertrocknung hervorgerufen worden sein. Im Rahmen dieser Erfindung wird unter dem Begriff "amorph" auch "röntgenamorph" verstanden. Dies heißt, dass die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, dass die Produkte mikrokristalline Bereiche der Größe 10 bis einige Hundert nm aufweisen, wobei Werte bis maximal 50 nm und insbesondere bis maximal 20 nm bevorzugt sind. Insbesondere bevorzugt sind verdichtete/kompaktierte amorphe Silikate, compoundierte amorphe Silikate und übertrocknete röntgenamorphe Silikate.

Der eingesetzte feinkristalline, synthetische und gebundenes Wasser enthaltende Zeolith ist vorzugsweise Zeolith A und/oder P. Als Zeolith P wird Zeolith MAP® (Handelsprodukt der Firma Crosfield) besonders bevorzugt. Geeignet sind jedoch auch Zeolith X sowie Mischungen aus A, X und/oder P. Kommerziell erhältlich und im Rahmen der vorliegenden Erfindung bevorzugt einsetzbar ist beispielsweise auch ein Co-Kristallisat aus Zeolith X und Zeolith A (ca. 80 Gew.-% Zeolith X), das von der Firma SASOL unter dem Markennamen VEGOBOND AX^{®} vertrieben wird und durch die Formel

nNa₂O˙(1-n)K₂O˙Al₂O₃˙(2 - 2,5)SiO₂˙(3,5 - 5,5) H₂O

n = 0,90 - 1,0

beschrieben werden kann. Der Zeolith kann als sprühgetrocknetes Pulver oder auch als ungetrocknete, von ihrer Herstellung noch feuchte, stabilisierte Suspension zum Einsatz kommen. Für den Fall, dass der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Selbstverständlich ist auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate.

Um beim Waschen bei Temperaturen von 60 °C und darunter eine verbesserte Bleichwirkung von in Wasser H₂O₂ liefernden Verbindungen zu erreichen, können Bleichaktivatoren in die Wasch- und Reinigungsmittel eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Zusätzlich zu den konventionellen Bleichaktivatoren oder an deren Stelle können auch sogenannte Bleichkatalysatoren in die flüssigen Wasch- und Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Amminkomplexe sind als Bleichkatalysatoren verwendbar.

Ein erfindungsgemäßes flüssiges Wasch- oder Reinigungsmittel enthält bevorzugt ein Verdickungsmittel. Das Verdickungsmittel kann beispielsweise einen Polyacrylat-Verdicker, Xanthan Gum, Gellan Gum, Guarkernmehl, Alginat, Carrageenan, Carboxymethylcellulose, Bentonite, Wellan Gum, Johannisbrotkernmehl, Agar-Agar, Tragant, Gummi arabicum, Pektine, Polyosen, Stärke, Dextrine, Gelatine und Casein umfassen. Aber auch abgewandelte Naturstoffe wie modifizierten Stärken und Cellulosen, beispielhaft seien hier Carboxymethylcellulose und andere Celluloseether, Hydroxyethyl- und -propylcellulose sowie Kernmehlether genannt, können als Verdickungsmittel eingesetzt werden.

Zu den Polyacryl- und Polymethacryl-Verdickern zählen beispielsweise die hochmolekularen mit einem Polyalkenylpolyether, insbesondere einem Allylether von Saccharose, Pentaerythrit oder Propylen, vernetzten Homopolymere der Acrylsäure (INCI- Bezeichnung gemäß "International Dictionary of Cosmetic Ingredients" der "The Cosmetic, Toiletry and Fragrance Association (CTFA)": Carbomer), die auch als Carboxyvinylpolymere bezeichnet werden. Solche Polyacrylsäuren sind u.a. von der Fa. 3V Sigma unter dem Handelsnamen Polygel®, z.B. Polygel DA, und von der Fa. B.F. Goodrich unter dem Handelsnamen Carbopol® erhältlich, z.B. Carbopol 940 (Molekulargewicht ca. 4.000.000), Carbopol 941 (Molekulargewicht ca. 1. 250.000) oder Carbopol 934 (Molekulargewicht ca. 3. 000.000). Weiterhin fallen darunter folgende Acrylsäure-Copolymere: (i) Copolymere von zwei oder mehr Monomeren aus der Gruppe der Acrylsäure, Methacrylsäure und ihrer einfachen, vorzugsweise mit C₁₋₄-Alkanolen gebildeten, Ester (INCI Acrylates Copolymer), zu denen etwa die Copolymere von Methacrylsäure, Butylacrylat und Methylmethacrylat (CAS- Bezeichnung gemäß Chemical Abstracts Service: 25035-69-2) oder von Butylacrylat und Methylmethacrylat (CAS 25852-37-3) gehören und die beispielsweise von der Fa. Rohm & Haas unter den Handelsnamen Aculyn® und Acusöl® sowie von der Firma Degussa (Goldschmidt) unter dem Handelsnamen Tego® Polymer erhältlich sind, z.B. die anionischen nicht-assoziativen Polymere Aculyn 22, Aculyn 28, Aculyn 33 (vernetzt), Acusol 810, Acusol 820, Acusol 823 und Acusol 830 (CAS 25852-37-3); (ii) vernetzte hochmolekulare Acrylsäurecopolymere, zu denen etwa die mit einem Allylether der Saccharose oder des Pentaerythrits vernetzten Copolymere von C₁₀₋₃₀-Alkylacrylaten mit einem oder mehreren Monomeren aus der Gruppe der Acrylsäure, Methacrylsäure und ihrer einfachen, vorzugsweise mit C₁₋₄-Alkanolen gebildeten, Ester (INCI Acrylates/C₁₀₋₃₀ Alkyl Acrylate Crosspolymer) gehören und die beispielsweise von der Fa. B.F. Goodrich unter dem Handelsnamen Carbopol® erhältlich sind, z.B. das hydrophobierte Carbopol ETD 2623 und Carbopol 1382 (INCI Acrylates/C₁₀₋₃₀ Alkyl Acrylate Crosspolymer) sowie Carbopol Aqua 30 (früher Carbopol EX 473).

Ein weiteres bevorzugt einzusetzendes polymeres Verdickungsmittel ist Xanthan Gum, ein mikrobielles anionisches Heteropolysaccharid, das von Xanthomonas campestris und einigen anderen Species unter aeroben Bedingurigen produziert wird und eine Molmasse von 2 bis 15 Millionen Dalton aufweist. Xanthan wird aus einer Kette mit β-1,4-gebundener Glucose (Cellulose) mit Seitenketten gebildet. Die Struktur der Untergruppen besteht aus Glucose, Mannose, Glucuronsäure, Acetat und Pyruvat, wobei die Anzahl der Pyruvat-Einheiten die Viskosität des Xanthan Gums bestimmt.

Xanthan Gum lässt sich durch folgende Formel (1) beschreiben:

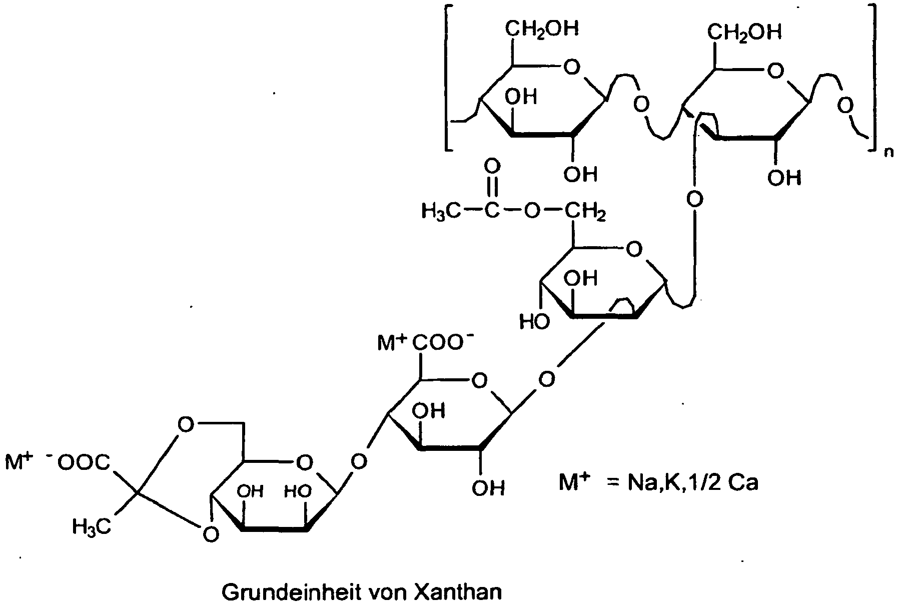

Xanthan Gum ist beispielsweise von der Fa. Kelco unter den Handelsnamen Keltrol® und Kelzan® oder auch von der Firma Rhodia unter dem Handelsnamen Rhodopol® erhältlich.

Bevorzugte wässrige flüssige Wasch- oder Reinigungsmittel enthalten bezogen auf das gesamte Mittel 0,01 bis 3 Gew.-% und vorzugsweise 0,1 bis 1 Gew.-% Verdickungsmittel. Die Menge an eingesetztem Verdickungsmittel ist dabei abhängig von der Art des Verdickungsmittels und dem gewünschten Grad der Verdickung.

Die wässrigen flüssigen Wasch- oder Reinigungsmittel können Enzyme, gegebenenfalls in verkapselter Form, enthalten. Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleichverstärkung bzw. zur Hemmung der Farbübertragung können auch Oxireduktasen eingesetzt werden. Besonders gut geeignet sind aus Bakterienstämmen oder Pilzen wie Bacillus subtilis, Bacillus licheniformis, Streptornyceus griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich verschiedene Cellulase-Typen durch ihre CMCase- und Avicelase-Aktivitäten unterscheiden, können durch gezielte Mischungen der Cellulasen gewünschte Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate in der Wasch- oder Reinigungsmittelzusammensetzung kann beispielsweise etwa 0,1 bis 5 Gew.-%, vorzugsweise 0,12 bis etwa 2,5 Gew.-% betragen.

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Phosphate und Sulfate. Aus herstellungstechnischer Sicht ist der Einsatz von Na₂SO₄ oder MgSO₄ in den Mitteln bevorzugt. Der Anteil an Elektrolyten in den Mitteln beträgt üblicherweise 0,5 bis 5 Gew.-%.

Nichtwässrige Lösungsmittel, die in den flüssigen Wasch- und Reinigungsmitteln eingesetzt werden können, stammen beispielsweise aus der Gruppe der ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylcnglykolmono-n-butylether, Diethylenglykolmethylether, Diethylenglykolethylether, Propylenglykolmethyl-, -ethyl- oder -propylether, Dipropylenglykolmonomethyl- oder -ethylether, Di-isopropylenglykolmonomethyl- oder -ethylether, Methoxy-, Ethoxy- oder Butoxytriglykol, 1 -Butoxyethoxy-2-propanol, 3-Methyl-3-methoxybutanol, Propylen-glykol-t-butylether sowie Mischungen dieser Lösungsmittel. Nichtwässrige Lösungsmittel können in den flüssigen Wasch- und Reinigungsmitteln in Mengen zwischen 0,5 und 15 Gew.-%, bevorzugt aber unter 12 Gew.-% und insbesondere unterhalb von 9 Gew.-% eingesetzt werden.

Um den pH-Wert der flüssigen Wasch- und Reinigungsmittel in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 7 Gew.-% der Gesamtformulierung nicht. Vorzugsweise weisen erfindungsgemäße flüssige Mittel einen sauren pH-Wert von insbesondere pH 3,5 bis pH 6,5 auf. Gewünschtenfalls kann ihre flüssige Phase auch neutral bis schwach alkalisch, etwa bis pH 9,5, sein. Wasser kann in erfindungsgemäßen Mitteln gewünschtenfalls in Mengen bis zu 90 Gew.-%, insbesondere 20 Gew.-% bis 75 Gew.-%, enthalten sein; gegebenenfalls können diese Bereiche jedoch auch über- oder unterschritten werden.

Um den ästhetischen Eindruck der flüssigen Wasch- oder Reinigungsmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben. Falls die erfindungsgemäßen Kapseln gefärbt sind, weist die flüssige Phase des Mittels vorzugsweise eine andere Farbe oder einen anderen Farbton auf.

Als Schauminhibitoren, die in den flüssigen Wasch- und Reinigungsmitteln eingesetzt werden können, kommen beispielsweise Seifen, Paraffine oder Silikonöle in Betracht, die gegebenenfalls auf Trägermaterialien aufgebracht sein können.

Geeignete Soil-Release-Polymere, die auch als "Antiredepositionsmittel" bezeichnet werden, sind beispielsweise nichtionische Celluloseether wie Methylcellulose und Methylhydroxypropylcellulose mit einem Anteil an Methoxygruppen von 15 bis 30 Gew.-% und an Hydroxypropylgruppen von 1 bis 15 Gew.-%, jeweils bezogen auf den nichtionischen Celluloseether sowie die aus dem Stand der Technik bekannten Polymere der Phthalsäure und/oder Terephthalsäure bzw. von deren Derivaten, insbesondere Polymere aus Ethylenterephthalaten und/oder Polyethylen- und/oder Polypropylenglykolterephthalaten oder anionisch und/oder nichtionisch modifizierten Derivaten von diesen. Geeignete Derivate umfassen die sulfonierten Derivate der Phthalsäure- und Terephthalsäure-Polymere.

Optische Aufheller (sogenannte "Weißtöner") können den flüssigen Wasch- und Reinigungsmitteln zugesetzt werden, um Vergrauungen und Vergilbungen der behandelten textilen Flächengebilde zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Di-hydrochinolinone, 1,3-Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel abgebaute Stärke, Aldehydstärken usw. Auch Polyvinylpyrrolidon ist brauchbar. Bevorzugt werden jedoch Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxy-methylcellulose und deren Gemische in Mengen von 0,1 bis 5 Gew.-%, bezogen auf die Mittel, eingesetzt.

Da textile Flächengebilde, insbesondere aus Reyon, Zellwolle, Baumwolle und deren Mischungen, zum Knittern neigen können, weil die Einzelfasern gegen Durchbiegen, Knicken, Pressen und Quetschen quer zur Faserrichtung empfindlich sind, können die Mittel synthetische Knitterschutzmittel enthalten. Hierzu zählen beispielsweise synthetische Produkte auf der Basis von Fettsäuren, Fettsäureestern, Fettsäureamiden, -alkylolestern, -alkylolamiden oder Fettalkoholen, die meist mit Ethylenoxid umgesetzt sind, oder Produkte auf der Basis von Lecithin oder modifizierter Phosphorsäureester.

Zur Bekämpfung von Mikroorganismen können die flüssigen Wasch- und Reinigungsmittel antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarylsulfonate, Halogenphenole und Phenolmercuriacetat, wobei bei den erfindungemäßen Mitteln auch gänzlich auf diese Verbindungen verzichtet werden kann.

Um unerwünschte, durch Sauerstoffeinwirkung und andere oxidative Prozesse verursachte Veränderungen an den flüssigen Wasch- und Reinigungsmitteln und/oder den behandelten textilen Flächengebilden zu verhindern, können die Mittel in der flüssigen Phase Antioxidantien enthalten. Zu dieser Verbindungsklasse gehören beispielsweise substituierte Phenole, Hydrochinone, Brenzcatechine und aromatische Amine sowie organische Sulfide, Polysulfide, Dithiocarbamate, Phosphite und Phosphonate.

Ein erhöhter Tragekomfort kann aus der zusätzlichen Verwendung von Antistatika resultieren, die den Mitteln zusätzlich beigefügt werden. Antistatika vergrößern die Oberflächenleitfähigkeit und ermöglichen damit ein verbessertes Abfließen gebildeter Ladungen. Äußere Antistatika sind in der Regel Substanzen mit wenigstens einem hydrophilen Molekülliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsäureester) und schwefelhaltige (Alkylsulfonate, Alkylsulfate) Antistatika unterteilen. Lauryl- (bzw. Stearyl-) dimethylbenzylammoniumchloride eignen sich als Antistatika für textile Flächengebilde bzw. als Zusatz zu Waschmitteln, wobei zusätzlich ein Avivageeffekt erzielt wird.

Zur Verbesserung des Wasserabsorptionsvermögens, der Wiederbenetzbarkeit der behandelten textilen Flächengebilde und zur Erleichterung des Bügelns der behandelten textilen Flächengebilde können in den flüssigen Wasch- und Reinigungsmitteln beispielsweise Silikonderivate eingesetzt werden. Diese verbessern zusätzlich das Ausspülverhalten der Mittel durch ihre schauminhibierenden Eigenschaften. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quaterniert sind bzw. Si-OH-, Si-H- und/oder Si-Cl-Bindungen aufweisen. Die Viskositäten der bevorzugten Silikone liegen bei 25°C im Bereich zwischen 100 und 100.000 mPas, wobei die Silikone in Mengen zwischen 0,2 und 5 Gew.-%, bezogen auf das gesamte Mittel eingesetzt werden können.

Schließlich können die flüssigen Wasch- und Reinigungsmittel auch UV-Absorber enthalten, die auf die behandelten textilen Flächengebilde aufziehen und die Lichtbeständigkeit der Fasern verbessern. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenyl-substituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet.

Um die durch Schwermetalle katalysierte Zersetzung bestimmter Waschmittel-Inhaltsstoffe zu vermeiden, können Stoffe eingesetzt werden, die Schwermetalle komplexieren. Geeignete Schwermetallkomplexbildner sind beispielsweise die Alkalisalze der Ethylendiamintetraessigsäure (EDTA) oder der Nitrilotriessigsäure (NTA) sowie Alkalimetallsalze von anionischen Polyelektrolyten wie Polymaleaten und Polysulfonaten.

Eine bevorzugte Klasse von Komplexbildnern sind die Phosphonate, die in bevorzugten flüssigen Wasch- und Reinigungsmitteln in Mengen von 0,01 bis 2,5 Gew.-%, vorzugsweise 0,02 bis 2 Gew.-% und insbesondere von 0,03 bis 1,5 Gew.-% enthalten sind. Zu diesen bevorzugten Verbindungen zählen insbesondere Organophosphonate wie beispielsweise 1-Hydroxyethan-1,1-diphosphonsäure (HEDP), Aminotri(methylenphosphonsäure) (ATMP), Diethylentriamin-penta(methylenphosphonsäure) (DTPMP bzw. DETPMP) sowie 2-Phosphonobutan-1,2,4-tricarbonsäure (PBS-AM), die zumeist in Form ihrer Ammonium- oder Alkalimetallsalze eingesetzt werden.

Die Herstellung der flüssigen Wasch- und Reinigungsmittel erfolgt mittels üblicher und bekannter Methoden und Verfahren in dem beispielsweise die Bestandteile einfach in Rührkesseln vermischt werden, wobei Wasser, gegebenenfalls vorhandene nichtwässrige Lösungsmittel und Tensid(e) zweckmäßigerweise vorgelegt werden und die weiteren Bestandteile portionsweise hinzugefügt werden. Ein gesondertes Erwärmen bei der Herstellung ist nicht erforderlich, wenn es gewünscht ist, sollte die Temperatur der Mischung 80°C nicht übersteigen. Die Kapseln können stabil in den wässrigen flüssigen Wasch- und Reinigungsmittel dispergiert werden. Die Mittel sind normalerweise bei Raumtemperatur und bei 40 °C über einen Zeitraum von mindestens 4 Wochen und bevorzugt von mindestens 6 Wochen stabil, ohne dass die Kapseln aufrahmen oder sedimentieren. Bevorzugte Mittel weisen Dichten von 0,5 bis 2,0 g / cm³, insbesondere 0,7 bis 1,5 g / cm³, auf. Die Dichtedifferenz zwischen den Kapseln und der flüssigen Phase des Mittels beträgt vorzugsweise nicht mehr als 10 % der Dichte einer der beiden und ist insbesondere so gering, daß die gegebenenfalls umhüllten Kapseln und vorzugsweise auch gegebenenfalls sonstige in den Mitteln enthaltene Feststoffpartikel in der Flüssigphase schweben.

### Beispiele

### Beispiel 1: Herstellung eines monodisperse sphärischen PAP-Granulats (E1)

120 g einer 4%-igen Na-Alginat-Lösung (Texamid® 558 P, Cognis Deutschland GmbH) wurden mit 480 g einer PAP-Dispersion (Eureco® LX, Solvay Solexis) gemischt. Die Mischung wurde anschließend mit einer Labor-Dosierpumpe (Watson Marlow 505 Di) über Düsen mit einem Durchmesser von 1,0 mm bei einer Durchflussrate von 1,5 ml/min pro Düse in eine 2%-ige Ca-Nitrat-Lösung eingetropft. Dabei entstanden monodisperse Kugeln (E1) mit einem Durchmesser von ca. 3,5 mm. Diese wurden dem Fällbad entnommen.

### Beispiel 2: Herstellung eines gecoateten, monodispersen, sphärischen, PAP-Granulats (E2)

Das Granulat E1 aus Beispiel 1 wurde zunächst in einer Labor-Wirbelschichtanlage Aeromatic Fielder® bei einer Zulufttemperatur von 60° C oberflächlich angetrocknet und in der gleichen Labor-Wirbelschichtanlage, die als Wurstercoater mit beheizbarer Einsprühdüse ausgerüstet war, durch Aufsprühen von 30 °C über seinen Schmelzbereich erhitztem Paraffin (Schmelzpunkt 57°C - 60°C) mit einem Coating aus Paraffin mit einer Stärke von 20% bezogen auf das Ausgangsmaterial E1 beschichtet. In dem so erhaltenen PAP-Granulat E2 lag der PAP-Gehalt bei 66 Gew.-% Die Teilchengröße der Kugeln ging durch das beim Aufbringen des Paraffins stattfindende Trocknen auf 2,0 mm zurück.

### Beispiel 3: Herstellung eines erfindungsgemäßen Flüssigwaschmittels

Flüssige Waschnüttel W 1 (enthaltend E1) und W2 (enthaltend E2) folgender Zusammensetzung (Angaben jeweils in Gew.-%) wurden hergestellt:
16,5 % LAS (Cognis)
10% Dehydol® LT 7 (Cognis)
1% Sequion 10 H 60 (Polygon Chemie)
3% Natriumcitrat
8% Natriumsulfat
3% PAP-Granulat E1 bzw. E2
3,5% Enzymgranulat (hergestellt gemäß Beispiel 8. Granulat E6c der DE 10 2006 018 780)
0,25% Xanthan Gum TGCS (Fa. Jungbunzlauer Xanthan Ges.m.b.H.)
1% Parfüm
0,1% Silicon Entschäumer (Wacker Chemie AG)
ad 100% Wasser

Die Herstellung erfolgte, indem man in einem Rührbehälter Wasser und Xanthan vorlegte. Nach dem Quellen des Xanthans für 30 Minuten wurde das Natriumsulfat zugegeben. Danach erfolgte die Zugabe der Tenside und der weiteren Inhaltsstoffe unter Rühren. Der pH-Wert wurde mit konzentrierter NaOH auf 5,0 ± 0,2 eingestellt.

Die Lagerstabilität des Bleichmittel wurde bestimmt, indem die Proben der Mittel W1 und W2 für 1, 2, 4 und 6 Wochen bei einer Lagertemperatur von konstant 35°C eingelagert wurden. Der Ausgangsgehalt an PAP und die Gehalte nach entsprechnden Lagerzeiten wurden mit Hilfe einer iodometrischen Titration bei einer Temperatur von 0 °C bestimmt. Zum Vergleich wurde ein Mittel VI, das ansonsten gleich wie W1 und W2 zusarnmengesetzt war, aber an der Stelle von E1 oder E2 3 Gew.-% eines kommerziell erhältlichen PAP-Granulats (Eureco® Granulat, Solvay Solexis) enthielt, mit eingelagert und vermessen. Die erhaltenen Werte sind in der folgenden Tabelle zusammengefasst. Dabei sind die PAP-Gehalte in % bezogen auf den Ausgangswert = 100 % angegeben:

| **Probe/ Zeit** | **0 Wochen** | **1 Woche** | **2 Wochen** | **4 Wochen** | **6 Wochen** |
|---|---|---|---|---|---|
| **V1** | 100 | 86,8 | 72,5 | 42,8 | 25,5 |
| **W1** | 100 | 97,9 | 92,1 | 76,4 | 66,0 |
| **W2** | 100 | 100,0 | 100,0 | 86,4 | 71,0 |

## Patentansprüche

1. Verwendung von kapselförmigen Bleichmittelteilchen, die dadurch erhältlich sind, dass man eine wäßrige Mischung enthaltend dispergiertes, feinteiliges Bleichmittel, welches eine Peroxocarbonsäwe ist, und wasserlösliches vernetzbares Polymer vertropft und vernetzt und die Bleichmittelgranula mit einem Paraffinwachs umhüllt, zur Herstellung von Wasch- und Reinigungsmitteln, insbesondere flüssigen Wasch- oder Reinigungsmitteln und unter diesen insbesondere wasserhaltigen flüssigen Mitteln.

2. Wässriges flüssiges Wasch- oder Reinigungsmittel, enthaltend Tensid und kapselförmige monodisperse sphärische Bleichmittelgranula, die dadurch erhältlich sind, dass man eine wäßrige Mischung enthaltend dispergiertes, feinteiliges Bleichmittel, welches eine Peroxocarbonsäure ist, und wasserlösliches vernetzbares Polymer vertropft und vernetzt und die Bleichmittelgranula mit einem Paraffinwachs umhüllt.

3. Mittel nach Anspruch 2, **dadurch gekennzeichnet, dass** es mindestens einen zusätzlichen aktiven Inhaltsstoff, der nicht Bestandteil der Granula ist, ausgewählt aus der Gruppe umfassend optische Aufheller, Komplexbildner, Bleichaktivatoren, Farbstoffe, Duftstoffe, Antioxidantien, Gerüststoffe, Enzyme, Enzym-Stabilisatoren, antimikrobielle Wirkstoffe, Vergrauungsinhibitoren, Antiredepositionsmittel, pH-Stellmittel, Soil-Release-Polymere, Farbtransfer-Inhibitoren, Elektrolyte, konditionierende Öle, Schleifmittel, hautpflegende Mittel, Schauminhibitoren, Vitamine, Proteine, Konservierungsmittel, Waschkraftverstärker, Perlglanzgeber und UV-Absorber sowie deren Gemische, enthält.

4. Mittel nach Anspruch 2 oder 3, **dadurch gekennzeichnet, dass** die Bleichmittelgranula einen Durchmesser entlang der größten räumlichen Ausdehnung von 100 µm bis 10.000 µm, insbesondere 1 mm bis 3 mm, aufweisen.

5. Mittel nach einem der Ansprüche 2 bis 4, **dadurch gekennzeichnet, dass** die Peroxocarbonsäure eine Imidoperoxocarbonsäure, insbesondere 4-Phthalimidoperoxobutansäure, 5-Phthalimidoperoxopentansäure, 6-Phthalimidoperoxohexansäure, 7-Phthalimidoperoxoheptansäure, N,N'-terephthaloyl-di-6-aminoperoxohexansäure oder eine Mischungen aus diesen ist.

6. Mittel nach einem der Ansprüche 2 bis 5, **dadurch gekennzeichnet, dass** das wasserlösliche vernetzbare Polymer ein ionotrop vernetzbares Polymer ist, insbesondere ausgewählt aus der Gruppe umfassend Carrageenan, Alginat und Gellan Gum sowie deren Mischungen.

## Claims

1. Use of encapsulated bleaching agent particles, which are obtainable, by drip-processing and crosslinking an aqueous mixture containing dispersed, finely particulate bleaching agent, which is a peroxycarboxylic acid, and water-soluble crosslinkable polymer, and encasing the bleaching agent granules with a paraffin wax, for the manufacture of washing and cleaning agents, in particular liquid washing or cleaning agents, and among them in particular water-containing liquid agents.

2. An aqueous liquid washing or cleaning agent, containing surfactant and containing encapsulated monodisperse spherical bleaching agent granules, which are obtainable by drip-processing and crosslinking an aqueous mixture containing dispersed, finely particulate bleaching agent, which is a peroxycarboxylic acid, and water-soluble crosslinkable polymer, and encasing the bleaching agent granules with a paraffin wax.

3. The agent according to Claim 2, **characterized in that** it contains at least one additional active ingredient that is not a constituent of the granules, selected from the group encompassing optical brighteners, complexing agents, bleach activators, dyes, fragrances, antioxidants, builders, enzymes, enzyme stabilizers, antimicrobial active substances, graying inhibitors, anti-redeposition agents, pH adjusting agents, soil-release polymers, color transfer inhibitors, electrolytes, conditioning oils, slip agents, skin-care agents, foam inhibitors, vitamins, proteins, preservatives, washing-power intensifiers, luster agents, and UV absorbers, and mixtures thereof.

4. The agent according to Claim 2 or 3, **characterized in that** the bleaching agent granules have a diameter along the greatest spatial extension of 100 µm to 10,000 µm, in particular 1 mm to 3 mm.

5. The agent according to one of Claims 2 to 4, **characterized in that** the peroxycarboxylic acid is an imidoperoxycarboxylic acid, in particular 4-phthalimidoperoxybutanoic acid, 5-phthalimidoperoxypentanoic acid, 6-phthalimidoperoxyhexanoic acid, 7-phthalimidoperoxyheptanoic acid, N,N'-terephthaloyl di-6-aminoperoxyhexanoic acid, or a mixture thereof.

6. The agent according to one of Claims 2 to 5, **characterized in that** the water-soluble crosslinkable polymer is an ionotropically crosslinkable polymer, especially selected from the group encompassing carrageenan, alginate, and gellan gum, and mixtures thereof.

## Revendications

1. Utilisation de particules d'agent de blanchiment sous la forme de capsules, que l'on obtient en transformant en gouttes et en réticulant un mélange aqueux contenant un agent de blanchiment dispersé finement divisé, à savoir un acide peroxocarboxylique, et un polymère réticulable soluble dans l'eau, et en enrobant les granulés d'agent de blanchiment avec une cire de paraffine, pour la production d'agents de lavage et de nettoyage, en particulier d'agents de lavage ou de nettoyage liquides et, parmi ces derniers, d'agents liquides en particulier aqueux.

2. Agent de lavage ou de nettoyage liquide aqueux contenant un ou plusieurs agents tensioactifs et des granulés sphériques monodispersés d'agent de blanchiment sous la forme de capsules, que l'on obtient en transformant en gouttes et en réticulant un mélange aqueux contenant un agent de blanchiment dispersé finement divisé, à savoir un acide peroxocarboxylique, et un polymère réticulable soluble dans l'eau, et en enrobant les granulés d'agent de blanchiment avec une cire de paraffine.

3. Agent selon la revendication 2, **caractérisé en ce qu'**il contient au moins un constituant actif supplémentaire, qui ne représente pas un constituant des granulés, choisi parmi le groupe comprenant des azurants optiques, des formateurs de complexes, des activateurs du blanchiment, des colorants, des fragrances, des antioxydants, des builders, des enzymes, des stabilisateurs enzymatiques, des substances actives antimicrobiennes, des inhibiteurs du grisaillement, des agents antiredéposition, des agents de réglage du pH, des polymères antisalissure, des inhibiteurs de transfert des couleurs, des électrolytes, des huiles revitalisantes, des abrasifs, des agents d'entretien de la peau, des inhibiteurs de mousse, des vitamines, des protéines, des conservateurs, des renforçateurs de la puissance de lavage, des agents conférant un reflet nacré et des absorbants de l'ultraviolet, ainsi que leurs mélanges.

4. Agent selon la revendication 2 ou 3, **caractérisé en ce que** les granulés d'agent de blanchiment présentent un diamètre sur leur étendue spatiale maximale de 100 µm à 10.000 µm, en particulier de 1 mm à 3 mm.

5. Agent selon l'une quelconque des revendications 2 à 4, **caractérisé en ce que** l'acide peroxocarboxylique représente un acide imidoperoxocarboxylique, en particulier l'acide 4-phtalimidoperoxobutanoïque, l'acide 5-phtalimidoperoxopentanoïque, l'acide 6-phtalimidoperoxo-hexanoïque, l'acide 7-phtalimidoperoxoheptanoïque, l'acide N,N'-téréphtaloyl-di-6-aminoperoxohexanoïque ou un de leurs mélanges.

6. Agent selon l'une quelconque des revendications 2 à 5, **caractérisé en ce que** le polymère réticulable soluble dans l'eau est un polymère réticulable ionotrope, choisi en particulier parmi le groupe comprenant le carraghénane, l'alginate et la gomme de gellane, ainsi que leurs mélanges.
